# EUROPEAN PATENT APPLICATION

(11) **EP 4 814 875 A1**
(43) Date of publication of application: **30.09.2026**
(21) Application number: 24893124.8
(22) Date of filing: 22.10.2024
(51) Int. Cl.: G06T 11/60

(54) **IMAGE DISPLAY METHOD AND APPARATUS, AND ELECTRONIC DEVICE AND STORAGE MEDIUM**

(30) Priority: 20.11.2023 CN 202311550412
(71) Applicant: Beijing Zitiao Network Technology Co., Ltd., Beijing 100190 (CN)
(72) Inventor: YANG, Enqiang, Beijing 100028 (CN); HAO, Siyuan, Beijing 100028 (CN); SHI, Jing, Beijing 100028 (CN); LUO, Bin, Beijing 100028 (CN); LI, Yue, Beijing 100028 (CN); QIN, Jie, Beijing 100028 (CN)
(74) Representative: Isarpatent
(86) International application number: PCT/CN2024/126391
(87) International publication number: WO 2025/107965

(57) **Abstract**

The present disclosure relates to the technical field of image processing, and discloses an image display method and apparatus, an electronic device, and a storage medium. The present disclosure provides the image display method, including: acquiring an image processing instruction to obtain an image to be processed corresponding to a preset canvas, wherein an area of the preset canvas is an image editing area; and displaying, on the preset canvas, the image to be processed containing target processing images corresponding to at least two drawing boards, to allow for image editing of the image to be processed, wherein a size of the preset canvas is greater than a size of the drawing boards, and the size of the drawing boards is used to indicate a size of a published image.

## Description

### CROSS-REFERENCE TO RELATED APPLICATION(S)

This application claims priority to Chinese Patent Application No. 202311550412.8, entitled "IMAGE DISPLAY METHOD AND APPARATUS, ELECTRONIC DEVICE, AND STORAGE MEDIUM", filed with the China National Intellectual Property Administration on November 20, 2023, the disclosure of which is incorporated by reference in its entirety.

### FIELD

The present disclosure relates to the technical field of image processing, and in particular, to an image display method and apparatus, an electronic device, and a storage medium.

### BACKGROUND

To enhance the human-computer interaction experience, a user may use an image editing software to perform image editing processing on a plurality of selected images respectively and then publish the plurality of images obtained after the image editing processing. However, during the editing processing, only images that are displayed independently after publication can be processed.

### SUMMARY

In view of this, the present disclosure provides an image display method and apparatus, an electronic device, and a storage medium, to solve the problem about image display.

In a first aspect, the present disclosure provides an image display method, including:
acquiring an image processing instruction to obtain an image to be processed corresponding to a preset canvas, wherein an area of the preset canvas is an image editing area; and
displaying, on the preset canvas, the image to be processed containing target processing images corresponding to at least two drawing boards, to allow for image editing of the image to be processed, wherein a size of the preset canvas is greater than a size of the drawing boards, and the size of the drawing boards is used to indicate a size of a published image.

In a second aspect, the present disclosure provides an image display apparatus, including:
a first acquiring module, configured to acquire an image processing instruction to obtain an image to be processed corresponding to a preset canvas, wherein an area of the preset canvas is an image editing area; and
a first processing module, configured to display, on the preset canvas, the image to be processed containing target processing images corresponding to at least two drawing boards, to allow for image editing of the image to be processed, wherein a size of the preset canvas is greater than a size of the drawing boards, and the size of the drawing boards is used to indicate a size of a published image.

In a third aspect, the present disclosure provides an electronic device, including a memory and a processor, wherein the memory and the processor are in mutual communication connection, the memory has computer instructions stored therein, and the processor executes the computer instructions to perform the image display method in the first aspect or any corresponding implementation.

In a fourth aspect, the present disclosure provides a computer-readable storage medium. The computer-readable storage medium has computer instructions stored therein, and the computer instructions are used to cause a computer to perform the image display method in the first aspect or any corresponding implementation.

### BRIEF DESCRIPTION OF THE DRAWINGS

In order to describe technical solutions in specific implementations of the present disclosure or the prior art more clearly, accompanying drawings required to be used in the descriptions of the specific implementations or the prior art will be simply introduced below. It is apparent that the accompanying drawings described below are some implementations of the present disclosure, and those of ordinary skill in the art may also obtain other accompanying drawings according to these accompanying drawings without creative work.
FIG. 1 is a schematic flowchart of an image display method according to an embodiment of the present disclosure;
FIG. 2 is a schematic flowchart of another image display method according to an embodiment of the present disclosure;
FIG. 3 is a schematic diagram of the display of an image to be processed according to an embodiment of the present disclosure;
FIG. 4 is a schematic diagram of the display of an interactive interface according to an embodiment of the present disclosure;
FIG. 5 is a schematic flowchart of yet another image display method according to an embodiment of the present disclosure;
FIG. 6 is a schematic diagram of the display of another interactive interface according to an embodiment of the present disclosure;
FIG. 7 is a schematic flowchart of yet another image display method according to an embodiment of the present disclosure;
FIG. 8 is a schematic diagram of an image to be published according to an embodiment of the present disclosure;
FIG. 9 is a schematic diagram of another image to be published according to an embodiment of the present disclosure;
FIG. 10 is a block diagram of a structure of an image display apparatus according to an embodiment of the present disclosure; and
FIG. 11 is a schematic diagram of a hardware structure of an electronic device according to an embodiment of the present disclosure.

### DETAILED DESCRIPTION OF EMBODIMENTS

In order to make the objectives, technical solutions, and advantages of embodiments of the present disclosure clearer, the technical solutions in the embodiments of the present disclosure are clearly and completely described in combination with the accompanying drawings in the embodiments of the present disclosure, and it is apparent that the described embodiments are merely a part rather than all of embodiments of the present disclosure. Based on the embodiments of the present disclosure, all other embodiments obtained by those skilled in the art without creative work shall fall within the scope of protection of the present disclosure.

In the related art, when a user performs image editing processing on an image to be processed using an image editing software, the image editing is performed independently on an image to be published. That is, after image editing is performed on a current image, image editing is performed on a next image, resulting in independent images to be published.

Based on this, an embodiment of the present disclosure provides an image display method through which simultaneous image editing processing may be performed on a plurality of target processing images to establish an association relationship between images to be published, thereby enhancing the fun and creativity of the image editing software.

According to embodiments of the present disclosure, an embodiment of an image display method is provided. It should be noted that steps shown in flowcharts of the accompanying drawings may be performed in a computer system, such as a group of computer-executable instructions. Although a logical sequence is shown in the flowcharts, the steps shown or described may be performed in a sequence different from that shown herein in some cases.

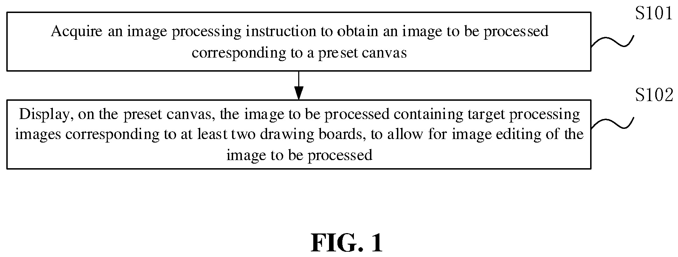

In this embodiment, the image display method is provided, which may be used in an electronic device, such as a computer and a mobile terminal. FIG. 1 is a flowchart of an image display method according to an embodiment of the present disclosure. As shown in FIG. 1, the process includes the following steps:
Step S101: An image processing instruction is acquired, to obtain an image to be processed corresponding to a preset canvas.

An area of the preset canvas is an image editing area. That is, an area where the preset canvas is displayed on the electronic device is an area where the user may perform image editing on the image to be processed. Image editing may include, but is not limited to, any one or a combination of the following operations: adjusting or modifying a size, color, contrast, and brightness of the image to be processed, and performing image enhancement processing. Specific operations may depend on actually received image processing instructions.

In some examples, the image to be processed may be a stored complete single image. In some other examples, the image to be processed may also be a composite image formed by stitching a plurality of selected images.

Step S102: The image to be processed containing target processing images corresponding to at least two drawing boards is displayed on the preset canvas, to allow for image editing of the image to be processed.

A size of the preset canvas is greater than a size of the drawing boards, and the size of the drawing boards is used to indicate a size of a published image. To allow a plurality of published images to have an association relationship, a correspondence between the image to be processed and a plurality of drawing boards is established to determine a target processing image corresponding to each drawing board, and accordingly, when the image to be processed is displayed on the preset canvas, processing images corresponding to at least two drawing boards may be simultaneously displayed.

By simultaneously displaying the target processing images corresponding to the at least two drawing boards on the preset canvas, when the user subsequently needs to perform image editing on the image to be processed, the user can perform image editing processing on the plurality of target processing images together, thereby allowing image editing results among the target processing images to have an association relationship, and thus enhancing the fun and creativity of using the image editing software by the user.

According to the image display method provided in this embodiment, the image to be processed that has the target processing images corresponding to the plurality of drawing boards may be displayed on the single preset canvas. Subsequently, when image editing needs to be performed on the image to be processed, the plurality of target processing images may be processed collectively, thereby establishing the association relationship between the images to be published and enhancing the fun and creativity of the image editing software.

Further, displaying the target processing images corresponding to the at least two drawing boards on the single preset canvas is beneficial for saving extra content occupied when displaying the image to be processed, thereby improving the performance of the electronic device.

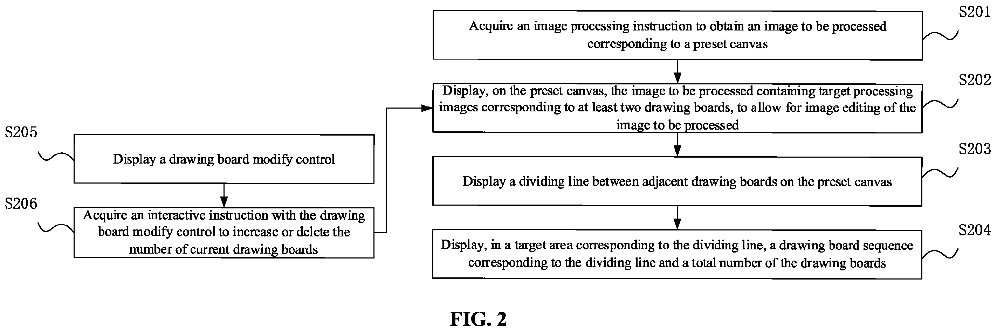

In this embodiment, an image display method is provided, which may be used in the above-mentioned electronic device, such as a computer and a mobile terminal. FIG. 2 is a flowchart of an image display method according to an embodiment of the present disclosure. As shown in FIG. 2, the process includes the following steps:
Step S201: An image processing instruction is acquired, to obtain an image to be processed corresponding to a preset canvas. Please refer to step S101 in the embodiment shown in FIG. 1 for details, which are not repeated herein.
Step S202: The image to be processed containing target processing images corresponding to at least two drawing boards is displayed on the preset canvas, to allow for image editing of the image to be processed. Please refer to step S102 in the embodiment shown in FIG. 1 for details, which are not repeated herein.
Step S203: A dividing line between adjacent drawing boards is displayed on the preset canvas.

To facilitate the user in clearly identifying a size of a published image, the dividing line between the adjacent drawing boards is displayed on the preset canvas, thereby distinguishing the target processing images through the dividing line.

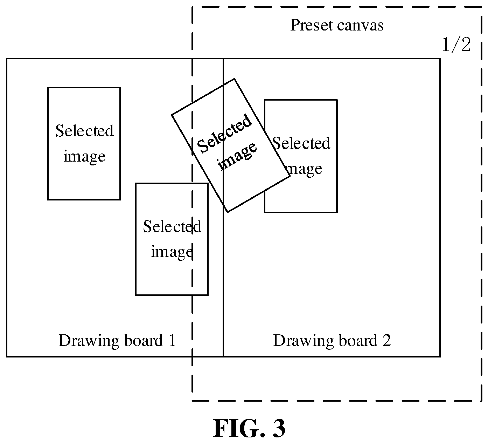

In an optional implementation scenario, a schematic diagram of the display of the image to be processed on the preset canvas may be shown in FIG. 3.A boundary between two drawing boards is a location of the dividing line. Images on the drawing boards are the target processing images.

According to the image display method provided in this embodiment, when the image to be processed is displayed on the preset canvas, the dividing line between the adjacent drawing boards is displayed, helping the user clearly identify image content included in the target processing image corresponding to each drawing board when the user performs image editing on the image to be processed, facilitating targeted processing by the user, and thus enhancing the use experience of the user.

In an optional implementation, the above-mentioned image display method further includes:
Step S204: A drawing board sequence corresponding to the dividing line and a total number of the drawing boards are display in a target area corresponding to the dividing line.

To facilitate the user in clearly identifying whether the image to be processed is fully displayed on the current preset canvas, the drawing board sequence corresponding to the dividing line and the total number of the drawing boards are displayed in the target area corresponding to the dividing line, thereby allowing the user to view the corresponding target processing images on the drawing boards according to the drawing board sequence corresponding to the dividing line and the total number of the drawing boards.

The target area may be any area near the dividing line. For example, in combination with the schematic diagram of the display shown in FIG. 3, the target area may be an upper left corner of the dividing line."1/2" displayed in the target area indicates that the total number of the drawing boards is 2, and the drawing board sequence corresponding to the dividing line is 1.If the drawing board sequence corresponding to the dividing line is 2, "2/2" is displayed in the target area.

In some other optional implementations, the above-mentioned image display method further includes:
Step S205: A drawing board modify control is displayed.

The drawing board modify control is a control used to modify the number of drawing boards. Since the number of drawing boards affects the size of the image to be processed and is the same as the number of images to be ultimately published, to satisfy use requirements of the user, the drawing board modify control is displayed on a current display interface, thereby allowing the user to adjust the number of drawing boards in a targeted manner using the drawing board modify control, and thus enhancing the human-computer interactivity of the image editing software.

Step S206: An interactive instruction with the drawing board modify control is acquired, to increase or delete the number of current drawing boards.

When the interaction instruction with the drawing board modify control is acquired, it indicates that the user needs to modify the number of the current drawing boards, and then increase or decreases the number of the current drawing boards according to the interactive instruction.

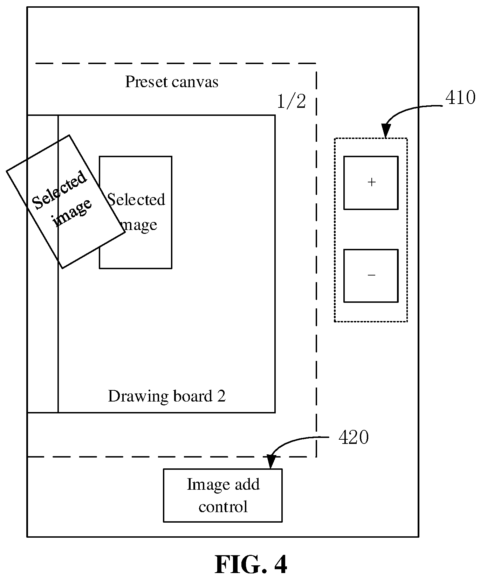

In some optional implementation scenarios, as shown in FIG. 4, the drawing board modify control 410 may include two sub-controls: "+" and "-". The sub-control "+" is used to increase the number of the current drawing boards, while the sub-control "-" is used to decrease the number of the current drawing boards. If the interactive instruction with the drawing board modify control is generated by touching the sub-control "+", the number of the current drawing boards is increased. Similarly, if the interactive instruction with the drawing board modify control is generated by touching the sub-control "-", the number of the current drawing boards is decreased.

In an example, to prevent the number of drawing boards from being excessively increased or decreased, a minimum number and a maximum number of drawing boards are preset to control the modification of the number of drawing boards by the user between the minimum number and the maximum number of drawing boards, thereby reasonably controlling the number of drawing boards.

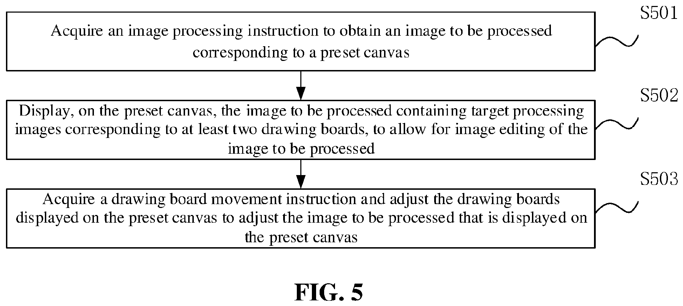

In this embodiment, an image display method is provided, which may be used in the above-mentioned electronic device, such as a computer and a mobile terminal. FIG. 5 is a flowchart of an image display method according to an embodiment of the present disclosure. As shown in FIG. 5, the process includes the following steps:
Step S501: An image processing instruction is acquired, to obtain an image to be processed corresponding to a preset canvas.
Step S502: The image to be processed containing target processing images corresponding to at least two drawing boards is displayed on the preset canvas, to allow for image editing of the image to be processed.
Step S503: A drawing board movement instruction is acquired and the drawing boards displayed on the preset canvas is adjusted to adjust the image to be processed that is displayed on the preset canvas.

Since the size of the preset canvas is greater than a size of the drawing boards, when the user needs to view the target processing image corresponding to the drawing boards that is not fully displayed, the user needs to issue the drawing board movement instruction to adjust the drawing boards displayed on the preset canvas, thereby adjusting the image to be processed that is displayed on the preset canvas and ensuring that the user may view required image content.

In some optional implementations, step S503 includes:
Step a1: The drawing board movement instruction is acquired and a relative displacement between the drawing boards and the preset canvas is determined.
Step a2: The drawing boards displayed on the preset canvas is adjusted based on the relative displacement.

Specifically, a mapping relationship between the image to be processed and the preset canvas is established in advance. When the drawing board movement instruction is acquired, it indicates that current positions of the drawing boards change. Since the position of the preset canvas remains unchanged, to facilitate targeted adjustment of the drawing boards displayed on the preset canvas, the relative displacement between the drawing boards and the preset canvas is determined, thereby determining a movement direction of the image to be processed according to a direction of the relative displacement and a partial image to be displayed in the image to be processed according to a magnitude of the relative displacement.

In an example, the drawing board movement instruction may be generated by the user through a preset gesture in the image editing area. For example, the preset gesture may involve dragging two fingers in a target direction. By tracking a motion trajectory of the user fingers on the image editing area, the relative displacement between the drawing boards and the preset canvas is determined.

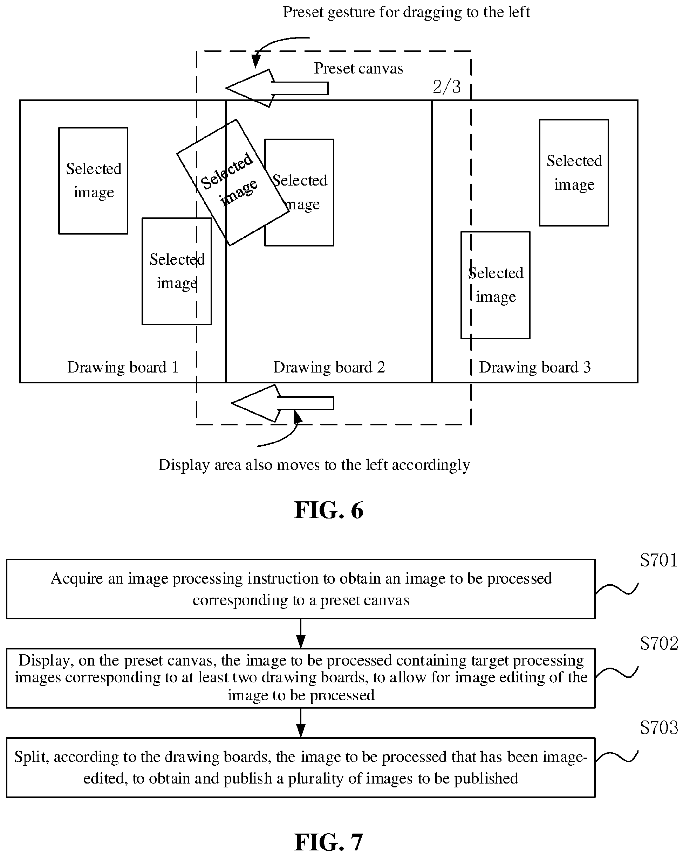

In an optional implementation scenario, as shown in FIG. 6, when the user drags the drawing board to the left using the preset gesture, the preset canvas remains stationary, and a display area of the image to be processed also moves to the left accordingly, thereby adjusting a display position of the drawing board on the preset canvas and adjusting the image to be processed that is displayed on the preset canvas according to the mapping relationship between the image to be processed and the preset canvas.

In an example, a rendering rate for rendering the preset canvas depends on a rate of change of the relative displacement. If the rate of change of the relative displacement is less than a maximum rendering rate, the adjusted image to be processed is rendered at the rate of change of the relative displacement. If the rate of change of the relative displacement is greater than or equal to the maximum rendering rate, the adjusted image to be processed is rendered at the maximum rendering rate.

In another example, to improve the rendering efficiency, the entire image to be processed is first loaded before displaying the image to be processed on the preset canvas. Accordingly, during display, only a partial area image in the image to be processed that is the same as the size of the preset canvas is displayed.

According to the image display method provided in this embodiment, an actual case of scrolling the preset canvas may be simulated through a method for adjusting the drawing boards displayed on the preset canvas, thereby satisfying user visual experience while achieving the objective of bearing the plurality of target processing images on the single preset canvas.

In some optional implementations, the following method may be employed to obtain the image to be processed corresponding to the preset canvas according to the acquired image processing instruction:
Step b1: The image processing instruction is acquired, and a specified number of preset drawing boards are arranged in a preset arrangement direction to obtain a combined drawing board.
Step b2: A plurality of selected images are arranged on the combined drawing board to obtain an image to be processed corresponding to the preset canvas.

Specifically, after the image processing instruction is acquired, the specific number of preset drawing boards are arranged in the preset arrangement direction to clearly identify a layout direction and size of the image to be processed, thereby obtaining the combined drawing board. For example, the preset arrangement direction may be parallel arrangement in a horizontal row or a vertical column. The plurality of selected images are arranged on the combined drawing board to clearly identify the target processing images corresponding to the drawing boards, thereby obtaining the image to be processed corresponding to the preset canvas.

A method for arranging the plurality of selected images on the combined drawing board may be automatic arrangement according to a preset template or manual arrangement and layout by the user according to needs. A specific setting method is not limited. The target processing images include at least one selected image. If there are a plurality of selected images in the target processing images, an arrangement method of the plurality of selected images in the target processing images may be adjusted according to user requirements.

In some other optional implementations, the above-mentioned method further includes:
Step b3: An image add control is displayed.
Step b4: An interactive instruction with the image add control is acquired, and the selected images are added.

Specifically, to improve a page interaction capability, when the preset canvas is displayed, the image add control is also displayed. Accordingly, when the user needs to add the selected images, the user may trigger the interactive instruction with the image add control to add the selected images, thereby satisfying use requirements of the user.

In an optional implementation scenario, in combination with a schematic diagram of the display of an interactive interface shown in FIG. 4, the image add control 420 may be displayed below the preset canvas, thereby satisfying use habits of the user in image addition.

In this embodiment, an image display method is provided, which may be used in the above-mentioned electronic device, such as a computer and a mobile terminal. FIG. 7 is a flowchart of an image display method according to an embodiment of the present disclosure. As shown in FIG. 7, the process includes the following steps:
Step S701: An image processing instruction is acquired, to obtain an image to be processed corresponding to a preset canvas.
Step S702: The image to be processed containing target processing images corresponding to at least two drawing boards is displayed on the preset canvas, to allow for image editing of the image to be processed.
Step S703: The image to be processed that has been image-edited is splited according to the drawing boards, to obtain and publish a plurality of images to be published.

Since the size of each drawing board is the same as the size of the actual published image, splitting the image to be processed that has been image-edited according to the drawing boards allows for directly obtaining the plurality of images to be published for publication. After being obtained, the plurality of images to be published are published and respectively displayed through a plurality of preset canvases, thereby satisfying social requirements of the user, and thus enhancing user social fun.

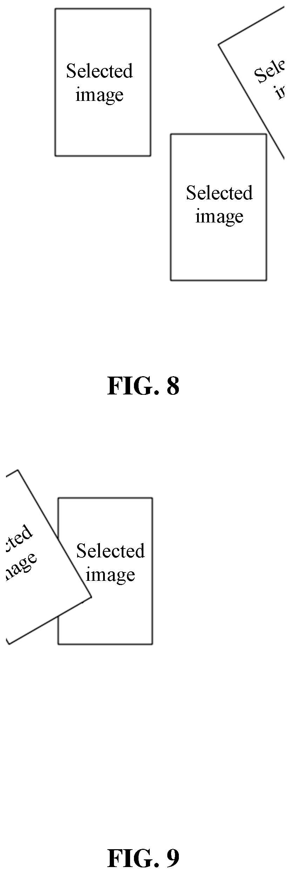

In some optional implementation scenarios, in combination with the image to be processed shown in FIG. 3, containing target processing images corresponding to two drawing boards, after image editing, the image to be processed that has been image-edited is split according to the drawing boards, resulting in images to be published shown in FIG. 8 and FIG. 9.

According to the image display method provided in this embodiment, by displaying the target processing images corresponding to the plurality of drawing boards on the single preset canvas, an internal memory can be saved. By performing image editing on the image to be processed through the preset canvas, simultaneous image editing on the target processing images among the drawing boards can be ensured, thereby allowing the obtained images to be published to have an association relationship, and thus not only enhancing the convenience of image editing but also improving the efficiency of publishing the images to be published, effectively boosting the fun and creativity of the image editing software, and enhancing the use experience of the user.

In some optional implementation scenarios, the process of publishing images according to the image display method provided in this embodiment may be as follows:
An image processing instruction is acquired, a specified number of preset drawing boards are arranged in a preset arrangement direction to obtain a combined drawing board, and a plurality of selected images are arranged on the combined drawing board using an automatic display or manual layout method to obtain an image to be processed corresponding to the preset canvas.

The image to be processed is loaded, and is displayed on the preset canvas. The size of the image to be processed is greater than that of the preset canvas. The image to be processed contains target processing images corresponding to at least two drawing boards. A dividing line between the adjacent drawing boards is displayed on the preset canvas, and a drawing board sequence corresponding to each dividing line and a total number of the drawing boards are displayed in a target area corresponding to the dividing line.

The image to be processed that has been image-edited is split according to the drawing boards, to obtain and publish a plurality of images to be published.

Before splitting the image to be processed that has been image-edited, the number of drawing boards may be increased or deleted through an interactive instruction with a displayed drawing board modify control. Selected images may also be added through an interactive instruction with the displayed image add control.

In this embodiment, an image display apparatus is further provided. The apparatus is used to implement the above-mentioned embodiments and preferred implementations, and details that have been described are not repeated. As used below, the term "module" may be a combination of software and/or hardware that implements preset functions. An apparatus described in the following embodiments is preferably implemented by the software, but it is possible and conceivable for implementing the apparatus through the hardware or a combination of the software and the hardware.

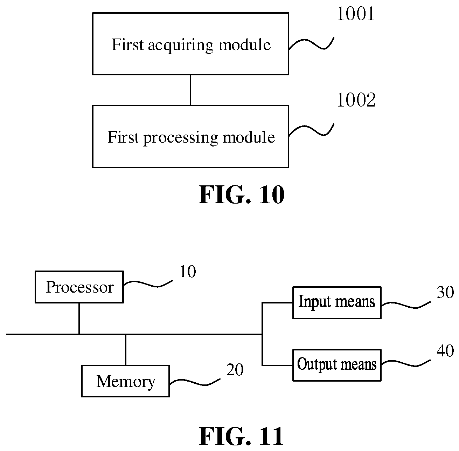

This embodiment provides an image display apparatus, as shown in FIG. 10, including:
a first acquiring module 1001, configured to acquire an image processing instruction to obtain an image to be processed corresponding to a preset canvas, wherein an area of the preset canvas is an image editing area; and
a first processing module 1002, configured to display, on the preset canvas, the image to be processed containing target processing images corresponding to at least two drawing boards, to allow for image editing of the image to be processed, wherein a size of the preset canvas is greater than a size of the drawing boards, and the size of the drawing boards is used to indicate a size of a published image.

In some optional implementations, the apparatus further includes: a first display module, configured to display a dividing line between adjacent drawing boards on the preset canvas.

In some optional implementations, the apparatus further includes: a second display module, configured to display, in a target area corresponding to the dividing line, a drawing board sequence corresponding to the dividing line and a total number of the drawing boards.

In some optional implementations, the apparatus further includes: a third display module, configured to display a drawing board modify control; and a second acquiring module, configured to acquire an interactive instruction with the drawing board modify control to increase or delete the number of current drawing boards.

In some optional implementations, the apparatus further includes: a third acquiring module, configured to acquire a drawing board movement instruction and adjust the drawing boards displayed on the preset canvas to adjust the image to be processed that is displayed on the preset canvas.

In some optional implementations, the third acquiring module includes: a position determination unit, configured to acquire a drawing board movement instruction and determine a relative displacement between the drawing boards and the preset canvas; and an adjustment unit, configured to adjust, based on the relative displacement, the drawing boards displayed on the preset canvas.

In some optional implementations, the first acquiring module 1001 includes: a first processing unit, configured to acquire an image processing instruction, and arrange a specified number of preset drawing boards in a preset arrangement direction to obtain a combined drawing board; and a second processing unit, configured to arrange a plurality of selected images on the combined drawing board to obtain an image to be processed corresponding to the preset canvas.

In some optional implementations, the apparatus further includes: a fourth display module, configured to display an image add control; and a fourth acquiring module, configured to acquire an interactive instruction with the image add control, and add selected images.

In some optional implementations, the apparatus further includes: a second processing module, configured to split, according to the drawing boards, the image to be processed that has been image-edited to obtain and publish a plurality of images to be published.

Further functional descriptions of the above-mentioned various modules and units are the same as those in the above-mentioned corresponding embodiments, which are not repeated herein.

The image display apparatus in this embodiment is presented in the form of a functional unit. The unit refers to an application specific integrated circuit (ASIC), a processor and a memory executing one or more software or fixed programs, and/or other devices that may provide the above-mentioned functions.

An embodiment of the present disclosure further provides an electronic device, having the image display apparatus shown in FIG. 10 above.

Referring to FIG. 11, FIG. 11 is a schematic structural diagram of an electronic device according to an optional embodiment of the present disclosure. As shown in FIG. 11, the electronic device includes: one or more processors 10, a memory 20, as well as interfaces for connecting various components, including a high-speed interface and a low-speed interface. The various components are in mutual communication connection using different buses and may be installed on a common motherboard or installed in other methods as needed. The processor may process instructions executed within the electronic device, including instructions stored in or on the memory to display graphical information of a graphical user interface (GUI) on an external input/output means (e.g., a display device coupled to an interface).In some optional implementations, a plurality of processors and/or a plurality of buses may be used together with a plurality of memories and storage units as needed. Similarly, a plurality of electronic devices may be connected. Each device provides some necessary operations (e.g., as a server array, a set of blade servers, or a multiprocessor system).One processor 10 is used as an example in FIG. 11.

The processor 10 may be a central processing unit, a network processor, or a combination thereof. The processor 10 may further include a hardware chip. The above-mentioned hardware chip may be an application specific integrated circuit, a programmable logic device, or a combination thereof. The above-mentioned programmable logic device may be a complex programmable logic device, a field-programmable gate array, a generic array logic, or any combination thereof.

The memory 20 stores instructions executable by at least one processor 10, such that the at least one processor 10 performs the method shown in the above-mentioned embodiments.

The memory 20 may include a program storage area and a data storage area. The program storage area may store an operating system and an application required by at least one function. The data storage area may store data, etc. created based on the use of the electronic device. In addition, the memory 20 may include a high-speed random access memory, and may also include a non-transitory memory, such as at least one disk storage device, at least one flash memory device, or other non-transitory solid-state storage devices. In some optional implementations, the memory 20 optionally includes memories remotely set relative to the processor 10. These remote memories may be connected to the electronic device through a network. The examples of the above-mentioned network include, but are not limited to, an Internet, an intranet, a local area network, a mobile communication network, and a combination thereof.

The memory 20 may include a volatile memory, such as a random access memory. The memory may also include a non-volatile memory, such as a flash memory, a hard drive, or a solid-state drive. The memory 20 may further include combinations of the above-mentioned types of memories.

The electronic device further includes an input means 30 and an output means 40. The processor 10, the memory 20, the input means 30, and the output means 40 may be connected through a bus or other methods, and bus connection is taken as an example in FIG. 11.

The input means 30 may receive input digital or character information and generate key signal inputs relevant to user settings and function control of the electronic device, such as a touch screen, a keypad, a mouse, a trackpad, a touchpad, an indicator rod, one or more mouse buttons, a trackball, and a joystick. The output means 40 may include a display device, an auxiliary lighting means (e.g., a light-emitting diode (LED)), a tactile feedback means (e.g., a vibration motor), etc. The above-mentioned display device includes, but is not limited to, a liquid crystal display, a light emitting diode, a display, and a plasma display. In some optional implementations, the display device may be a touch screen.

An embodiment of the present disclosure further provides a computer-readable storage medium. The above-mentioned method according to the embodiments of the present disclosure may be implemented in hardware and firmware, or may be implemented as computer code that can be recorded on a storage medium, or is downloaded through the network and originally stored on a remote storage medium or a non-transitory machine-readable storage medium and then is stored on a local storage medium, and therefore the method described herein may be processed by software that is stored on a storage medium using a general-purpose computer, a dedicated processor, or programmable or specialized hardware. The storage medium may be a magnetic disk, an optical disk, a read-only memory, a random access memory, a flash memory, a hard drive, a solid-state drive, or the like. Further, the storage medium may also include combinations of the above-mentioned types of memories. It should be understood that a computer, a processor, a microprocessor controller, or programmable hardware includes a storage component that can store or receive software or computer code. When the software or the computer code is accessed and executed by the computer, the processor, or the hardware, the method shown in the above-mentioned embodiments is implemented.

It should be understood that before the use of the technical solutions disclosed in the embodiments of the present disclosure, the user shall be informed of the type, range of use, use scenarios, etc., of personal information involved in the present disclosure in an appropriate manner in accordance with relevant laws and regulations, and the authorization of the user shall be obtained.

For example, in response to reception of an active request from the user, prompt information is sent to the user to clearly inform the user that a requested operation will require access to and use of the personal information of the user. As such, the user may independently choose, according to the prompt information, whether to provide the personal information to software or hardware, such as an electronic device, an application, a server, or a storage medium, that performs operations in the technical solutions of the present disclosure.

As an optional but non-limiting implementation, in response to the reception of the active request from the user, the method for sending the prompt information to the user may be, for example, a pop-up window, in which the prompt information may be displayed in text. Further, the pop-up window may also carry a selection control for the user to choose whether to "agree" or "disagree" to provide the personal information to the electronic device.

It should be understood that the above-mentioned process of notifying and obtaining the authorization of the user is only illustrative and does not constitute a limitation on the implementations of the present disclosure, and other manners that satisfy the relevant laws and regulations may also be applied in the implementations of the present disclosure.

Although the embodiments of the present disclosure are described in combination with the accompanying drawings, those skilled in the art may make various modifications and variations without departing from the spirit and scope of the present disclosure, and such modifications and variations fall within the scope defined by the appended claims.

## Claims

1. An image display method, comprising:
acquiring an image processing instruction to obtain an image to be processed corresponding to a preset canvas, an area of the preset canvas being an image editing area; and
displaying, on the preset canvas, the image to be processed containing target processing images corresponding to at least two drawing boards, to allow for image editing of the image to be processed, a size of the preset canvas being greater than a size of the drawing boards, and the size of the drawing boards being used to indicate a size of a published image.

2. The method of claim 1, further comprising: displaying a dividing line between the adjacent drawing boards on the preset canvas.

3. The method of claim 2, further comprising: displaying a drawing board sequence corresponding to the dividing line and a total number of the drawing boards in a target area corresponding to the dividing line.

4. The method of claim 1, further comprising:
displaying a drawing board modify control; and
acquiring an interactive instruction with the drawing board modify control to increase or delete a number of current drawing boards.

5. The method of claim 1, further comprising:
acquiring a drawing board movement instruction and adjusting drawing boards displayed on the preset canvas to adjust the image to be processed that is displayed on the preset canvas.

6. The method of claim 5, wherein acquiring the drawing board movement instruction and adjusting the drawing boards displayed on the preset canvas comprises:
acquiring the drawing board movement instruction and determining a relative displacement between the drawing boards and the preset canvas; and
adjusting, based on the relative displacement, the drawing boards displayed on the preset canvas.

7. The method of claim 1, wherein acquiring the image processing instruction to obtain the image to be processed corresponding to the preset canvas comprises:
acquiring the image processing instruction, and arranging a specified number of preset drawing boards in a preset arrangement direction to obtain a combined drawing board; and
arranging a plurality of selected images on the combined drawing board to obtain an image to be processed corresponding to the preset canvas.

8. The method of claim 7, further comprising:
displaying an image add control; and
acquiring an interactive instruction with the image add control, and adding the selected images.

9. The method of claim 1, further comprising:
splitting, according to the drawing boards, the image to be processed that has been image-edited, to obtain and publish a plurality of images to be published.

10. An image display apparatus, comprising:
a first acquiring module, configured to acquire an image processing instruction to obtain an image to be processed corresponding to a preset canvas, an area of the preset canvas being an image editing area; and
a first processing module, configured to display, on the preset canvas, the image to be processed containing target processing images corresponding to at least two drawing boards, to allow for image editing of the image to be processed, a size of the preset canvas being greater than a size of the drawing boards, and the size of the drawing boards being used to indicate a size of a published image.

11. An electronic device, comprising:
a memory and a processor, wherein the memory and the processor are in mutual communication connection, the memory has computer instructions stored therein, and the processor executes the computer instructions to perform the image display method of any of claims 1 to 9.

12. A computer-readable storage medium having computer instructions stored therein, wherein the computer instructions are used to cause a computer to perform the image display method of any of claims 1 to 9.
